# EUROPEAN PATENT APPLICATION

(11) **EP 3 763 205 A1**
(43) Date of publication of application: **13.01.2021**
(21) Application number: 20184525.2
(22) Date of filing: 07.07.2020
(51) Int. Cl.: A01K 15/02

(54) **CHEWABLE TOY FOR DOMESTIC PET ORAL HYGIENE**

(30) Priority: 11.07.2019 IT 201900002283 U
(71) Applicant: New Project S.r.l., 20814 Varedo (MB) (IT)
(72) Inventor: CIPOLLA, Fiorenzo, 20814 Varedo (MB) (IT)
(74) Representative: Riccardi, Sergio

(57) **Abstract**

It is described a chewable toy (1) for domestic pet oral hygiene, like dogs and cats, provided with a plurality of surfaces, the surfaces provided with a plurality of features of different types and shapes (3, 4, 5), wherein the composition of the chewable toy for domestic pet oral hygiene is suitable for releasing active substances and scents when utilized.

## Description

### Field of the invention

The present invention relates to a chewable toy provided with peculiar shape and composition characteristics, better specified in claim 1.

In addition, the invention is suitable for improving, thanks to shape and composition characteristics, the domestic pet oral hygiene, using a combined physical/mechanical and chemical action of the features herein described.

### Background of the invention

Problems related to domestic pet care, like dogs and cats, are known and topical; any owner of a domestic animal, in particular dogs and cats, is dedicated to the pet health care. This can cause, because it is difficult to be sure of the own pet perfect health, recurring examinations from hygiene experts and veterinarians also, with resulting time and money consumption. One of the areas of major interest for the state of health and at the same time one of the hardest to personally deal with is the oral cavity area, prone to hygiene problems even in the best looked after pets.

### Technical problem

A problem that can occur in certain situations is to be able to take care or improve the health of the oral cavity of domestic animals such dogs and cats with traditional methods, a time and equipment consuming operation, even risky if the operator has not the right familiarity with such equipment.

In addition, another problem is that nowadays available products provide for just a partial solution of the problem of oral cavity health of domestic pets, wherein plaque and tartar, food debris and/or halitosis are treated with separate products (chewable toys for mechanical ablation, chemical washing etc.); this makes an appropriate cleaning very expensive and reduces the probability that the pet bears different hygienic treatments every day.

A further problem in this field is represented by the predisposition of the animal to accept the treatments, for an appropriate time-period daily.

### Summary

In this scenario the technical problem underlying the present invention is to design an item that can contribute daily to the oral hygiene of domestic animals such as dogs and cats, not substituting one-time specialist treatments, but at the same time assisting in the maintenance of a constant cleaning of oral cavity of dogs and cats.

Therefore, it is an object of the present invention to provide a sole item that can be easily utilized by the pet, and that at the same time helps the maintenance of a constant cleaning of oral cavity of dogs and cats with a combined mechanical and chemical action.

A further object of the present invention is to provide an item that acts both physically and chemically on different zones of interest of the oral cavity of the pet.

Moreover, an object of the present invention is an item or toy able to whitening the teeth of the domestic pets.

In addition, an object of the present invention is to utilize safe and natural materials that encourage the animal in utilizing the invention.

In addition, it is an object of the present invention to provide an item that contain, in the production phase, all the elements that constitute it without subsequent additives or treatments.

Again, it is an object of the present invention to diminish halitosis and dental yellowing problems of domestic pets like dogs and cats.

A further object of the present invention is to provide to the pet's owner an invention that can be functional, pleasant and comfortable to be utilized by the pet; in practice, it is an item that the pet can utilize to play but that has a double effect, at this juncture, to play and to provide for oral hygiene.

The technical problem and the objects specified are achieved by a chewable toy for domestic pet oral hygiene.

Preferably, said chewable toy has on its surface a plurality of features of different types and shapes.

Preferably again, the chewable toy has a particular composition that allows the improvement of oral cavity health of domestic pets.

In addition, preferably said particular composition is functionally activated only when the chewable toy is utilized.

Moreover, said composition is preferably a combination of a polymer, active particles and flavourings, said combination of components being suitable for extrusion and molding procedures.

### Brief description of the drawings

The features and the advantages of the present invention are herein clarified by the detailed description of preferred embodiments of such invention, with reference to the attached drawings, wherein:
Fig.1 is a top view, showing the chewable toy in an embodiment having the shape of a bone;
Fig.2 is a lateral view, showing the chewable toy in an embodiment having the shape of a bone;
Fig.3 is a top view, showing the chewable toy in an embodiment having a toroidal shape;
Fig.4 is a bottom view, showing the chewable toy in an embodiment having a toroidal shape.

### Detailed description of preferred embodiments

With reference to the mentioned drawings, it has to be pointed out that such drawings are an example, the chewable toy 1 can have any shape and dimension without moving away from the inventive concept of the invention, that lies in the characterization of an external surface 2 and in the composition of the chewable toy 1 for oral hygiene of domestic pets.

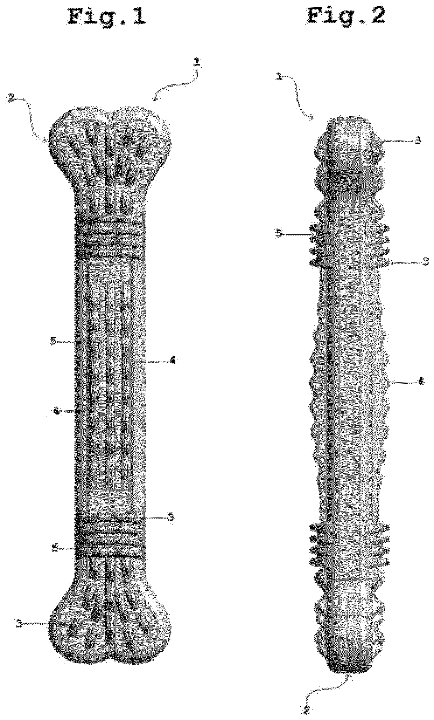

With reference to Fig.1 and Fig.2, features characterizing the external surface 2 of the chewable toy 1 for oral hygiene are visible in the illustrated embodiment.

For example, in Fig.1 and Fig.2 are shown round-tipped protruding elevations 3 and extended thin flaps 4, forming an external surface 2 characterized by any arbitrary features, and cavities 5 between the spaces of said features. Said external surface 2 has multiple functions, linked to a physical/mechanical action, as example, but not limited to, an abrasive action of plaque and tartar, a massage to gums for the release of debris hidden in interdental spaces, palate cleaning and so on.

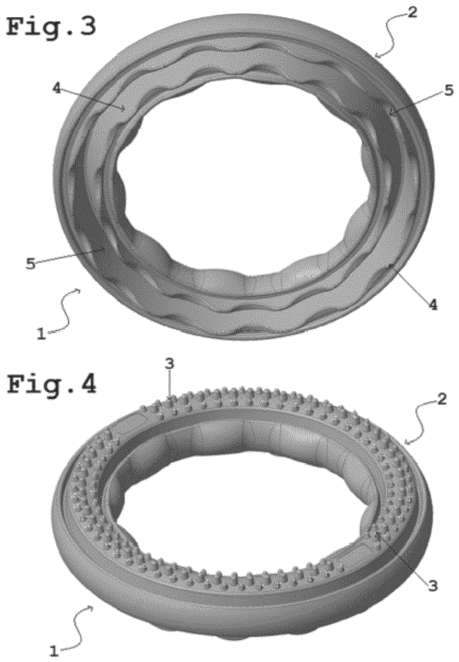

Said cavities 5 between features of the external surface 2 can participate in the cleaning action and host animal's treats (such as food or snacks can be inserted into such cavities 5, for example as shown in embodiment of Fig.3 and 4) that encourage even more the pet to play, and in this case to the contextual hygiene of the oral cavity.

The shapes of said chewable toy 1, as the ones showed in Fig.1 or in Fig.3, are arbitrarily chosen but in combination with features of the external surface 3 are thought to cooperate in the cleaning action of the features themselves or to encourage the animal in using the toy (i.e. the bone shape to encourage the dog or the toroid to give the pet owner a grip or an handle during the use of said chewable toy 1).

In addition, the oral cavity sanitation action is not accomplished by the invention solely because of its physical conformation; it is a useful effect of this invention to combine the aforementioned physical/mechanical action with a further chemical action. The combined chemical and physical/mechanical actions increase exponentially their cleaning and whitening effectiveness on pet's teeth, thanks to the effects herein discussed.

Said chemical action happens thanks to the composition of the chewable toy 1 for oral hygiene; said composition of the chewable toy 1 comprises a matrix 6, very small active particles 7 and scents 8.

Moreover, in a preferred embodiment of the present invention, said composition of said chewable toy 1 for domestic pet oral hygiene is an edible, nontoxic and/or completely digestible composition.

In this text for edible, nontoxic and/or completely digestible composition is intended that any compound constituting the chewable toy 1 is harmless and safe for the pet health, causing no drawbacks at any level of the oral, digestive or intestinal tracts of the pet.

Alternatively, in a preferred embodiment the matrix 6 is a thermoplastic polyurethane matrix 6 (e.g. granular LASTANE 40 NAT.:004F1 or similar products).

Moreover, in the preferred embodiment the active particles 7 are sodium bicarbonate microspheres 9. It is known in the field the whitening and disinfecting effect of the sodium bicarbonate, already utilized in different forms (liquids, pastes, gels etc.) for animal's teeth washing; inventively inserted in a chewable toy 1 it allows to overcome said washing because it can integrate this hygienic activity during the pet's playtime.

In addition, in the peculiar embodiment utilizing sodium bicarbonate microspheres 9, these microspheres break when undergo animal's teeth mechanical action, providing for a further mechanical abrasive surface to the chewable toy 1 that combines with the chemical action in a new combined use of the sodium bicarbonate in the pet oral cavity hygiene.

Alternatively, in another preferred embodiment of the present invention the active particles 7 are porous material microspheres 10.

Preferably, in addition, in a further embodiment of the present invention said active particles 7 are natural porous material microspheres 11.

In addition, in another embodiment of the present invention the active particles 7 in a single chewable toy 1 can consist in a combination of different active particles of the already mentioned materials such as for example both sodium bicarbonate and porous material microspheres 9, 10.

Moreover, in another embodiment of the present invention the active particles 7 can be of any material suitable for helping in the animal's dental care that employs mechanical and/or chemical action during utilization.

In addition, in the preferred embodiment of the invention the scents 8 are natural scents 8. Moreover, some example of natural scents 8 in the preferred embodiments of the present invention can comprise sage oil, coconut oil, ham scent, beef scent, chicken scent, mint essence, blueberry, banana, green apple scents wherein each of the mentioned scents have a specific action such as a disinfecting action, antibacterial action, use enhancing, whitening, halitosis ameliorative and so on.

The integration of the matrix 6, microspheres 9 and scents 8 proves to be surprisingly effective from the duration and effectiveness standpoint of the chewable toy 1 via a specific production method of the composite material, before moulding of the toy in its desired shape (i.e. injection moulding to obtain the bone shape, toroid etc); said material production method of the composition of the chewable toy 1 is characterized in that the final composition of the chewable toy 1 is obtained by direct extrusion of all the components (i.e. matrix 6, sodium bicarbonate microspheres 9 and natural scents 8 all inserted directly in a hopper connected to a screw extruder), wherein therefore the chewable toy 1 has the same weight percentage extruding phase composition of the final composition of said chewable toy 1 for domestic pet oral hygiene.

In the preferred embodiment herein shown, the composition of the chewable toy 1 for oral hygiene has a sodium bicarbonate microspheres 9 weight percentage selected in an interval between 0,1% and 99%.

A further advantage and innovative feature of the invention herein discussed is the release mode and/or action of the active components (i.e. sodium bicarbonate microspheres 9 and natural scents 8) which, embedded in the matrix 6, are only released during and after the mechanical action of the dog or cat which playing with the chewable toy 1 breaks the microspheres 9 and the matrix 6 wherein the natural scents 8 are contained, allowing the release of the active components. This release action allows to obtain a chewable toy 1 that maintains its combined physical/mechanical and chemical sanitation action without needing any additives addition, because the release due to the mechanical action of active components dispersed in the matrix 6 is gradual and continuous for the service life of the chewable toy 1 for pet oral hygiene.

It has to be noted that have been herein described and showed just some preferred embodiment, and that many variations, additions, modifications and/or combinations of single features can be made, without neither moving away from the general inventive concept nor leaving the extent of its protection as it is clear from the annexed claims.

## Claims

1. Chewable toy (1) for domestic pet oral hygiene having an external surface (2)
**characterized in that**
said external surface (2) is provided with at least one feature chosen among round-tipped protruding elevations (3) and/or extended thin flaps (4) and/or cavities (5) defined into spaces between said features,
wherein said chewable toy (1) for domestic pet oral hygiene is **characterized in that** its composition is an edible, nontoxic and/or completely digestible composition, and
said composition comprises a matrix (6), very small active particles (7) and scents (8).

2. Chewable toy (1) for domestic pet oral hygiene according to claim 1, wherein said matrix (6) part of said chewable toy (1) is a thermoplastic polyurethane matrix (6).

3. Chewable toy (1) for domestic pet oral hygiene according to any of the preceding claims, wherein the final composition of said chewable toy (1) is obtained by direct extrusion of all the components, having the same weight percentage extruding phase composition of the final composition of said chewable toy (1) for domestic pet oral hygiene.

4. Chewable toy (1) for domestic pet oral hygiene according to any of the preceding claims, wherein said active particles (7) are sodium bicarbonate microspheres (9).

5. Chewable toy (1) for domestic pet oral hygiene according to any of the preceding claims, wherein said scents (8) within the composition of said chewable toy (1) are natural scents (8).

6. Chewable toy (1) for domestic pet oral hygiene according to any of the preceding claims, wherein the weight percentage of sodium bicarbonate microspheres (9) compared to the whole chewable toy (1) is comprised in an interval between 0,1% and 99%.

7. Chewable toy (1) for domestic pet oral hygiene according to any of the preceding claims, wherein sodium bicarbonate of said microspheres (9) and natural scents (8) are released by the chewable toy (1) only after a mechanical action happening during the utilization.

8. Chewable toy (1) for domestic pet oral hygiene according to any of the preceding claims, wherein said active particles (7) are natural porous material microspheres (11).
